# EUROPÄISCHE PATENTANMELDUNG

(11) **EP 3 936 640 A1**
(43) Veröffentlichungstag der Anmeldung: **12.01.2022**
(21) Anmeldenummer: 20185313.2
(22) Anmeldetag: 10.07.2020
(51) Int. Cl.: C25D 11/02, C25D 11/14, C25D 11/18, C25D 11/24, H01R 4/00

(54) **FARBIG ELOXIERTE STROMSCHIENEN MIT KALTGASBESCHICHTUNG FÜR STROMRICHTER**

(71) Anmelder: Siemens Aktiengesellschaft, 80333 München (DE)
(72) Erfinder: Kneißl, Philipp, 90427 Nürnberg (DE); Neugebauer, Stephan, 91058 Erlangen (DE)

(57) **Zusammenfassung**

Die Erfindung betrifft ein Verfahren zur Herstellung einer Aluminiumstromschiene (1) für einen Stromrichter (10). Zur Verbesserung der Montage und Wartung eines Stromrichters mit einer derartigen Aluminiumstromschiene wird vorgeschlagen, dass in einem ersten Schritt die Oberfläche (2) oder zumindest Teile (21,22,23) der Oberfläche (2) der Aluminiumstromschiene (1) mittels einer Eloxalbehandlung eine oder mehrere vorgebbare Farben erhalten, wobei in einem zweiten Schritt zumindest an einem ersten Teil (21) der Oberfläche eine Kaltgasbeschichtung zur Schaffung einer Kontaktfläche angewendet wird. Ferner betrifft die Erfindung eine Aluminiumstromschiene (1) für einen Stromrichter (10), hergestellt mit einem derartigen Verfahren, wobei die Oberfläche (2) der Aluminiumstromschiene (1) eine vorgegebene Farbe aufweist, die mittels der Eloxalbehandlung auf die Oberfläche (2) gebracht wurde. Die Erfindung betrifft weiter einen Stromrichter (10) mit mindestens einer derartigen Aluminiumstromschiene (1), wobei die Farbe mindestens zweier der Stromschienen (1) des Stromrichters (10) sich unterscheiden.

## Beschreibung

Die Erfindung betrifft eine Aluminiumstromschiene für einen Stromrichter. Ferner betrifft die Erfindung ein Verfahren zur Herstellung einer derartigen Aluminiumstromschiene. Die Erfindung betrifft weiter einen Stromrichter mit derartigen Aluminiumstromschienen.

In Stromrichtern muss an vielen Stellen Strom zwischen den einzelnen Komponenten übertragen werden. Ab einer gewissen Stromstärke bieten sich Leiterplatten und Kabel nicht mehr für diese Aufgabe an und es werden Stromschienen, oftmals auch als diskrete Stromschienen bezeichnet, verwendet. Häufig werden insbesondere zum Schutz gegen Schwefelverbindungen galvanisch vernickelte Kupferschienen eingesetzt, um Strom zu übertragen. Diese haben einen hohen Leitwert und sind im Einsatz bewährt.

Alternativ werden auch Aluminiumstromschienen eingesetzt, die günstiger sind als die Kupferschienen. Diese benötigen allerdings eine Oberflächenbeschichtung, um einen Aufbau von Aluminiumoxid an der Kontaktstelle zu unterdrücken und damit einen reproduzierbar niedrigen Übergangswiderstand an Kontaktstellen zu realisieren. Diese galvanische Beschichtung ist aufwendiger als bei Kupferschienen. Die Färbung der behandelten Aluminiumschienen entspricht dem Überzugsmaterial, ist in der Regel silbern.

Neuerdings sind auch Kaltgas-Spritz-Beschichtungen (Cold-Spray Beschichtungen), auch als Kaltgasbeschichtung bezeichnet, für die Senkung des Übergangswiderstands an der Kontaktstelle bekannt. Diese ermöglichen eine lokale Behandlung des Materials und erfordern meist keinen mehrschichtigen Aufbau wie bei galvanischen Lösungen. Die Schienen, die bisher für stromführende Zwecke eingesetzt wurden, konnten bisher bei großen Stromdichten nur mit galvanisch vernickelter Oberfläche genutzt werden. Alternativ wurde die Oberfläche oftmals auch nur geputzt und gefettet Einige Sprühverfahren, insbesondere jedoch das Cold-Spray-Verfahren, durchdringen die Oxidschicht von Aluminium und ermöglichen daher den Einsatz von ansonsten unbehandeltem Aluminium bei hohen Stromdichten oder begrenzter Kühlung.

Der Erfindung liegt die Aufgabe zugrunde, eine Aluminiumstromschiene zu verbessern.

Diese Aufgabe wird durch ein Verfahren zur Herstellung einer Aluminiumstromschiene für einen Stromrichter gelöst, wobei in einem ersten Schritt die Oberfläche oder zumindest Teile der Oberfläche der Aluminiumstromschiene mittels einer Eloxalbehandlung eine oder mehrere vorgebbare Farben erhalten, wobei in einem zweiten Schritt zumindest an einem ersten Teil der Oberfläche eine Kaltgasbeschichtung zur Schaffung einer Kontaktfläche angewendet wird. Ferner wird die Aufgabe durch eine Aluminiumstromschiene für einen Stromrichter gelöst, die mittels eines derartigen Verfahrens zur Herstellung hergestellt worden ist, wobei die Oberfläche der Aluminiumstromschiene eine vorgegebene Farbe aufweist, die mittels der Eloxalbehandlung auf die Oberfläche aufgetragen wurde. Die Aufgabe wird weiter durch einen Stromrichter mit mindestens einer derartigen Aluminiumstromschiene gelöst, wobei die Farbe mindestens zweier der Stromschienen des Stromrichters sich unterscheiden.

Weitere vorteilhafte Ausgestaltungen der Erfindung sind in den abhängigen Ansprüchen angegeben.

Der Erfindung liegt unter anderem die Erkenntnis zugrunde, dass sich durch die Kombination von Eloxierung und anschließender Kaltgasbeschichtung eine besonders vorteilhafte Aluminiumstromschiene für Stromrichter herstellen lässt. Es hat sich gezeigt, dass eine Kaltgasbeschichtung nicht nur bei einer unbehandelten Aluminiumstromschiene vorgenommen werden kann, sondern auch eine eloxierte Aluminiumstromschiene mittels der Kaltgasbeschichtung bearbeitet werden kann.

Eine Eloxierung ist verbunden mit einem Aufbau der Aluminium-Oxidschicht, welche schlecht elektrisch leitet. Die Eloxierung ist für Stromschienen daher normalerweise ungeeignet. Erst mit der Kaltgasbeschichtung, die auch bei einer eloxierten Aluminiumschiene angewendet werden kann, können die eloxierten Aluminiumschienen auch als Stromschienen eingesetzt werden. Die Kaltgasbeschichtung durchbricht die Eloxalschicht an den Kontaktstellen und schafft damit gute Kontaktwiderstände auf der ansonsten schlecht leitfähigen Schienenoberfläche. Die Oberfläche muss daher nicht vollständig mit der Kaltgasbeschichtung behandelt werden. Es ist ausreichend, nur die Kontaktstellen entsprechend zu bearbeiten bzw. zu behandeln.

Die eloxierte Oberfläche der Aluminiumstromschiene schützt nicht nur besser vor Korrosion als eine natürlich gebildete Oxidschicht, sie kann auch für optische Zwecke eingesetzt werden und dabei beliebig eingefärbt werden. Mit anderen Worten kann durch eine Eloxal-Behandlung vor der Kaltgas-Spritz-Behandlung der Aluminiumstromschiene eine vorgebbare Farbe gegeben werden.

Farbige Stromschienen bieten eine Vielzahl von Vorteilen. Dabei können verschiedene Schienen farbig kodiert werden und damit ein Vertauschen oder falsches Montieren zuverlässig verhindert werden. Auch kann durch ein farbliches Hervorheben die Funktion der einzelnen Schienen besser visualisiert werden (z.B. Unterscheidung von DC und AC-Schienen oder Polarität im Schrank). Eloxieren ist günstiger als eine galvanische Beschichtung von Aluminium und bietet dabei trotzdem viele Vorteile einer optischen und korrosionsschützenden Oberfläche, die einen entsprechenden wertigen Eindruck beim Kunden erwecken. Die farbige Oberfläche kann dabei im Gegensatz zu einer Lackierung oder Umschrumpfung nicht abplatzen.

Eine Besonderheit ist die Einfärbung der Stromschienen mit einer von der natürlichen Aluminiumfarbe erkennbar abweichenden und einer einem speziellen Zweck dienenden Farbe (Funktionsfarbe, z.B. Codierung der Polarität). Eine weitere Besonderheit ist das Aufbrechen der Farbschicht an den Kontaktstellen durch das Sprühverfahren mittels Kaltgasbeschichtung.

Ein Stromrichter kann auch Stromschienen sowohl als Aluminiumstromschiene als auch aus Kupferstromschiene aufweisen. Wobei durch die Farbgebung der Aluminiumstromschiene diese sich von der Kupferstromschiene unterscheidet. Alternativ ist es auch möglich, durch die Farbgebung der Aluminiumstromschiene diese der Farbe der Kupferstromschiene anzupassen. Insbesondere ist dies dann vorteilhaft, wenn die Aluminiumstromschiene und die Kupferstromschiene die gleiche Funktion und/oder das gleiche Gefährdungspotential aufweisen.

Bei einer vorteilhaften Ausgestaltung der Erfindung wird in Abhängigkeit der Funktion und/oder des Gefährdungspotentials der Aluminiumstromschiene des Stromrichters eine Farbe für die Aluminiumstromschiene zugordnet. Bei der Montage des Stromrichters können so die unterschiedlichen Stromschienen auf einfache Weise unterschieden werden, wenn Stromschienen mit unterschiedlicher Funktion sich in der Farbe unterscheiden. Mit anderen Worten weisen die Stromschienen je nach Funktion eine unterschiedliche Farbe auf. Dadurch kann die Montagezeit verkürzt werden, weil die Montageanweisung deutlich einfacher und verständlicher gehalten werden kann. Durch die unterschiedliche Farbe ist auch im Wartungsfall oder Reparaturfall eine einfache Zuordnung der einzelnen Stromschienen zu ihrer Funktion aufgrund der Farbe möglich. Auch dies reduziert die Zeit für Wartung und Reparatur.

Darüber hinaus ist es alternativ oder ergänzend möglich, unterschiedliche Gefahrenpotentiale mittels der Farbe der Stromschienen zu kennzeichnen. So können beispielsweise Stromschienen, an denen eine niedrige und damit ungefährliche Spannung, auch als Schutzkleinspannung bezeichnet, anliegt, mit einer bestimmten Farbe, beispielsweise grün, gekennzeichnet werden. Niederspannung bis 1000V können mit einer weiteren Farbe gekennzeichnet werden. Auch für Spannungen über 1000V, oftmals als Mittelspannung oder Hochspannung bezeichnet, kann eine bestimmte Farbe vorgesehen werden, da von ihnen eine höhere Gefahr für das Wartungspersonal ausgeht.

Zusätzlich ist es auch möglich, die Funktion einer Stromschiene mittels der Farbe zu kennzeichnen. Somit werden für Stromschienen zur Übertragung von Gleichstrom und/oder die mit Gleichspannung beaufschlagt werden, eine bestimmte Farbe vorgesehen werden. Für Stromschienen mit Wechselspannung bzw. für Wechselstrom kann die Aluminiumstromschiene eine andere Farbe aufweisen.

Dabei ist es alternativ oder ergänzend möglich, dass die Aluminiumstromschiene unterschiedliche Farben aufweist, um damit sowohl die Funktion und das Gefährdungspotential zu signalisieren.

Im Folgenden wird die Erfindung anhand der in den Figuren dargestellten Ausführungsbeispiele näher beschrieben und erläutert. Es zeigen:
- FIG 1: eine farblich eloxierte Aluminiumstromschiene mit einer Kaltgasbeschichtung und
- FIG 2: einen Stromrichter mit einer derartigen Aluminiumstromschiene.

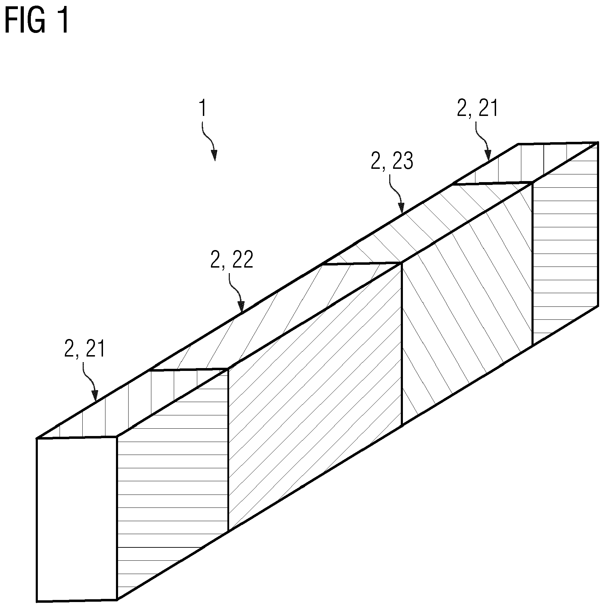

Die FIG 1 zeigt eine Aluminiumstromschiene 1. Die Oberfläche 2 der Aluminiumstromschiene 1 wurde im Rahmen des Herstellungsprozesses einer Eloxalbehandlung unterzogen. An einem ersten Teil 21 der Oberfläche 2 wurde anschließend eine Kaltgasbeschichtung vorgenommen. Diese erste Oberfläche stellt die Kontaktfläche da, an der ein elektrischer Kontakt mit einer anderen Komponente erfolgen kann. Oftmals befindet sich der erste Teil 21 mit der Kaltgasbeschichtung am Ende der Stromschiene, da dieser meist für die elektrische Kontaktierung vorgesehen ist. Ein zweiter Teil 22 der Oberfläche 2 weist eine vorgegebene Farbe auf. Diese Farbe kann die Funktion der Aluminiumstromschiene, beispielsweise die Verwendung als Stromschiene für Gleichspannung bzw. Gleichstrom oder Wechselspannung bzw. Wechselstrom, kennzeichnen. Der zweite Teil 22 der Oberfläche 2, der eine vorgegebene Farbe aufweist, kann sich, wie dargestellt, umlaufend um die Aluminiumstromschiene 1 befinden. Alternativ ist es auch möglich, dass nur ein ebener bzw. planer Teil, beispielsweise eine Seitenfläche, der Aluminiumstromfläche eine Farbe aufweist. Beispielsweise kann ein ebener rechteckförmiger Teil einer Seitenfläche der Aluminiumstromschiene 1 eine vorgegebene Farbe aufweisen.

Darüber hinaus weist diese Stromschiene an einem dritten Teil 23 ihrer Oberfläche 2 eine weitere Farbe auf. Diese kann beispielsweise zur Kennzeichnung des Gefahrenpotentials, zum Beispiel des Spannungsniveaus wie Schutzkleinspannung, Niederspannung oder Hochspannung, verwendet werden. Die unterschiedlichen Bereiche der Oberfläche 2 sind durch unterschiedliche Schraffierungen in der FIG 1 gekennzeichnet. Die Schraffierungen sind umlaufend, vorteilhafterweise würde jedoch nur eine meist ebene Fläche beschichtet.

Alternativ zu dem hier dargestellten Ausführungsbeispiel ist es auch möglich, nur eine Farbkennzeichnung für die Aluminiumstromschiene 1 zu verwenden. In diesem Fall kann der dritte Teil 23 der Oberfläche farblos sein oder die Oberfläche nur aus einem ersten Teil 21 und einem zweiten Teil 22 bestehen.

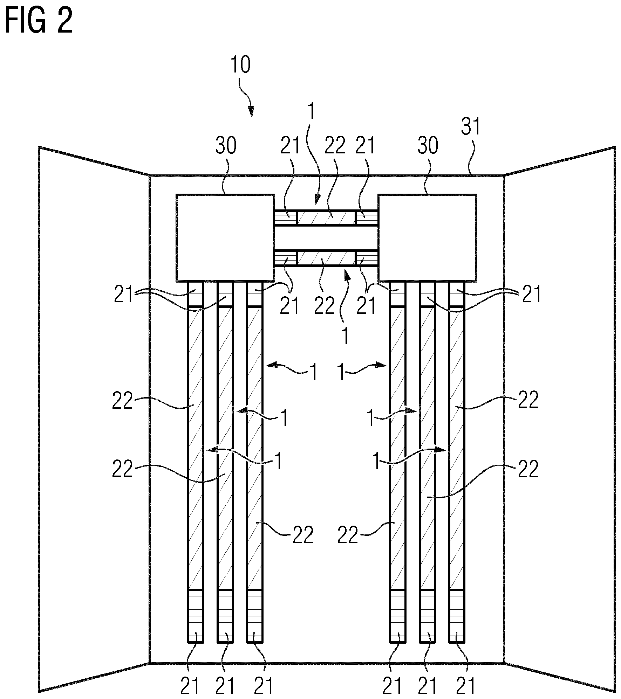

Die FIG 2 zeigt einen Stromrichter 10 mit mehreren Aluminiumstromschienen 1, die in einem Stromrichterschrank 31 des Stromrichters 10 angeordnet sind. Die Aluminiumstromschienen 1 dienen unter anderem dazu, elektrische Komponenten 30, wie beispielsweise Halbleiter, Kondensatoren, Spulen, Sicherungen oder Anschlüsse miteinander elektrisch zu verbinden. Dabei kann es sich beispielsweise bei den Aluminiumstromschienen 1, die zwischen den elektrischen Komponenten 30 angeordnet sind, um Stromschienen für die Übertragung von Gleichstrom handeln, bei denen zwischen diesen beiden Stromschienen eine Gleichspannung anliegt. Diese sind daher mit einer festgelegten Farbe gekennzeichnet. Die senkrecht im Stromrichter 10 verlaufenden Gruppen von jeweils drei Aluminiumstromschienen 1 können zur Übertragung von Wechselstrom mit einer Wechselspannung dienen. Aufgrund der unterschiedlichen Funktion weisen diese eine gegenüber der festgelegten Farbe der Gleichstromstromschiene unterschiedliche Farbe auf. Dies ist in der FIG 2 durch eine unterschiedliche Schraffierung gekennzeichnet. In diesem Ausführungsbeispiel weist die Oberfläche 2 der Aluminiumstromschienen 1 jeweils nur einen ersten und einen zweiten Teil 21,22 und damit nur eine Farbe auf. Ergänzend ist es auch möglich, durch Einführen eines dritten Teils 23 der Oberfläche 2 eine weitere Eigenschaft, wie beispielsweise das Gefahrenpotential der Stromschiene mittels weiterer Farben zu signalisieren. Aus Gründen der Übersichtlichkeit wurde in der Darstellung der FIG 2 darauf jedoch verzichtet.

Zusammenfassend betrifft die Erfindung ein Verfahren zur Herstellung einer Aluminiumstromschiene für einen Stromrichter. Zur Verbesserung der Montage und Wartung eines Stromrichters mit einer derartigen Aluminiumstromschiene wird vorgeschlagen, dass in einem ersten Schritt die Oberfläche oder zumindest Teile der Oberfläche der Aluminiumstromschiene mittels einer Eloxalbehandlung eine vorgebbare Farbe erhält, wobei in einem zweiten Schritt zumindest an einem ersten Teil der Oberfläche eine Kaltgasbeschichtung zur Schaffung einer Kontaktfläche angewendet wird. Ferner betrifft die Erfindung eine Aluminiumstromschiene für einen Stromrichter, hergestellt mit einem derartigen Verfahren, wobei die Oberfläche der Aluminiumstromschiene eine vorgegebene Farbe aufweist, die mittels der Eloxalbehandlung auf die Oberfläche gebracht wurde. Die Erfindung betrifft weiter einen Stromrichter mit derartigen Aluminiumstromschienen, wobei die Farbe mindestens zweier der Aluminiumstromschienen des Stromrichters sich unterscheiden.

## Patentansprüche

1. Verfahren zur Herstellung einer Aluminiumstromschiene (1) für einen Stromrichter (10), wobei in einem ersten Schritt die Oberfläche (2) oder zumindest Teile (21,22,23) der Oberfläche (2) der Aluminiumstromschiene (1) mittels einer Eloxalbehandlung eine oder mehrere vorgebbare Farben erhalten, wobei in einem zweiten Schritt zumindest an einem ersten Teil (21) der Oberfläche (2) eine Kaltgasbeschichtung zur Schaffung einer Kontaktfläche angewendet wird.

2. Aluminiumstromschiene (1) für einen Stromrichter (10), hergestellt mit einem Verfahren nach Anspruch 1, wobei die Oberfläche (2) der Aluminiumstromschiene (1) eine vorgegebene Farbe aufweist, die mittels der Eloxalbehandlung auf die Oberfläche (2) gebracht wurde.

3. Stromrichter (10) mit mindestens einer Aluminiumstromschiene (1) nach Anspruch 2, wobei die Farbe mindestens zweier Stromschienen (1) des Stromrichters (10) sich unterscheiden.

4. Stromrichter (10) nach Anspruch 3, wobei in Abhängigkeit der Funktion und/oder des Gefährdungspotentials der Aluminiumstromschiene eine Farbe für die Aluminiumstromschiene des Stromrichters zugordnet wird.
